# EUROPÄISCHE PATENTANMELDUNG

(11) **EP 2 476 730 A1**
(43) Veröffentlichungstag der Anmeldung: **18.07.2012**
(21) Anmeldenummer: 11151122.6
(22) Anmeldetag: 17.01.2011
(51) Int. Cl.: C08L 67/02

(54) **FLAMMHEMMENDE THERMOPLASTISCHE ZUSAMMENSETZUNG**

(71) Anmelder: BASF SE, 67056 Ludwigshafen (DE)
(72) Erfinder: Die Erfindernennung liegt noch nicht vor

(57) **Zusammenfassung**

Die Erfindung betrifft eine thermoplastische Zusammensetzung, enthaltend
A) ein Polyalkylenterephthalat
B) ein Elastomer ausgewählt aus der Gruppe
b1) der Polyalkylenterephthalat-Polyester-Urethane,
b2) der Polyalkylenterephthalat-Polyether-Urethane,
b3) der Polyalkylenterephthalat-Polyether,
b4) der Polyalkylenterephthalat-Polyester und deren Mischungen

C) ein halogenfreies Flammschutzmittel, ausgewählt aus der Gruppe
c1) der stickstoffhaltigen Flammschutzmittel
c2) der stickstoff- und phosphorhaltigen Flammschutzmittel
c3) der phosphorhaltigen Flammschutzmittel und deren Mischungen.

Weiterhin betrifft die Erfindung die Verwendung der erfindungsgemäßen thermoplastischen Zusammensetzung zu Herstellung von Fasern, Folien oder Formkörpern sowie Fasern, Folien oder Formkörper, die die erfindungsgemäße Zusammensetzung enthalten. Die Erfindung betrifft des Weiteren die Verwendung der thermoplastischen Zusammensetzung als Überzugmittel.

## Beschreibung

Die Erfindung betrifft eine thermoplastische Zusammensetzung, enthaltend
A) ein Polyalkylenterephthalat
B) ein Elastomer ausgewählt aus der Gruppe
   b1) der Polyalkylenterephthalat-Polyester-Urethane,
   b2) der Polyalkylenterephthalat-Polyether-Urethane,
   b3) der Polyalkylenterephthalat-Polyether,
   b4) der Polyalkylenterephthalat-Polyester und deren Mischungen
C) ein halogenfreies Flammschutzmittel, ausgewählt aus der Gruppe
   c1) der stickstoffhaltigen Flammschutzmittel
   c2) der stickstoff- und phosphorhaltigen Flammschutzmittel
   c3) der phosphorhaltigen Flammschutzmittel und deren Mischungen.

Weiterhin betrifft die Erfindung die Verwendung der erfindungsgemäßen thermoplastischen Zusammensetzung zu Herstellung von Fasern, Folien oder Formkörpern sowie Fasern, Folien oder Formkörper, die die erfindungsgemäße Zusammensetzung enthalten. Die Erfindung betrifft des Weiteren die Verwendung der thermoplastischen Zusammensetzung als Überzugmittel.

Speziell betrifft die Erfindung eine thermoplastische Zusammensetzung, enthaltend (A) ein Polybutylenterephthalat, (B) ein Polybutylenterephthalat-Polyester-Urethan (b1), (C) Aluminiumdiethylphosphinat, Melamincyanurat, oder Melaminpolyphosphat oder deren Mischungen.

Eine weitere Ausführungsform betrifft eine thermoplastische Zusammensetzungen, enthaltend (A) ein Polybutylenterephthalat, (B) ein Polybutylenterephthalat-Polyether (b2), (C) Aluminiumdiethylphosphinat, Melamincyanurat, oder Melaminpolyphosphat oder deren Mischungen.

Insbesondere betrifft die Erfindung auch eine thermoplastische Zusammensetzung, enthaltend (A) ein Polybutylenterephthalat, (B) ein Polybutylenterephthalat-Polyester (b3), (C) Aluminiumdiethylphosphinat, Melamincyanurat, oder Melaminpolyphosphat oder deren Mischungen.

Weitere bevorzugte Ausführungsformen sind den Ansprüchen und der Beschreibung zu entnehmen. Kombinationen bevorzugter Ausführungsformen fallen in den Rahmen der vorliegenden Erfindung.

Der Bedarf an flammhemmenden thermoplastischen Zusammensetzungen ist von wachsendem Interesse, wobei insbesondere Zusammensetzungen gefragt sind, die halogenfrei, insbesondere chlor- und bromfrei sind.

WO 2009/009249 A2 beschreibt eine halogenfreie Polyester Zusammensetzung mit verschiedenen flammhemmenden und stabilisierenden Zusätzen. Dabei werden herkömmliche hart-Segment Polyester verwendet.

In US 2008/0167406 A1 wird eine flammhemmende Formmasse auf Polybutylenterephthalat-Basis beschrieben, die neben einem Phosphinsäuresalz und einer Epoxyverbindung ein thermoplastisches Polyester-Elastomer umfasst. Dieses Elastomer kann einerseits ein Polyester-Polyester Elastomer sein. Hierbei kann das harte Segment ein Polyester aus einer aromatischen Disäure und einem kurzkettige Alkylendiol sein. Das weiche Segment ist aus einem Polyester, einer aliphatischen Disäure und einem kurzkettigen Alkylendiol oder Polycaprolactons. Dieses Elastomer kann andererseits ein Polyester-Polyether-Elastomer sein, wobei das harte Segment ein Polyester bestehend aus einer aromatischen Disäure und einem kurzkettigen Alkylendiol ist und das weiche Segment ein Polyoxyalkylen Glycol oder ein Polyester aus Polyoxyalkylen und einer aliphatischen Disäure ist.

WO 2006/040066 A1 beschreibt eine flammhemmende Formmasse, die neben Polybutylenterephthalat als Basiskomponente mindestens ein hoch- oder hyperverzweigtes Polycarbonat und/oder mindestens ein hochverzweigten Polyester oder ein Gemisch aus beiden umfasst. Zu der Formmasse werden verschiedene flammhemmende Additive hinzugefügt.

Aufgabe der vorliegenden Erfindung war es, eine thermoplastische Zusammensetzung zu entwickeln, die gut zu verarbeiten ist und zugleich eine flammhemmende Wirkung aufweist. Des Weiteren sollten Zusammensetzungen zur Verfügung gestellt werden, die eine helle Eigenfarbe aufweisen. Darüber hinaus war es eine Aufgabe, thermoplastische Zusammensetzungen mit flammhemmender Wirkung zu finden, die geruchsneutral sind. Die Zusammensetzungen sollten auch geeignet sein, um Überzüge, auch Coatings genannt, herzustellen.

Gelöst wird die gestellte Aufgabe mit einer eingangs beschriebenen thermoplastischen Zusammensetzung.

Komponente A der erfindungsgemäßen thermoplastischen Zusammensetzung ist ein Polyalkylenterephthalat. Hierunter werden auch Mischungen von Polyalkylenterephthalaten verstanden. Im Rahmen der Erfindung ist Polyalkylenterephthalat nicht auf Terephthalat enthaltende Verbindungen beschränkt. Vielmehr leiten sich erfindungsgemäße Polyalkylenterephthalate von Strukturen ab, die einen aromatischen Ring in der Hauptkette enthalten, der von einer aromatischen Dicarbonsäure stammt. Der aromatische Ring kann unsubstituiert oder substituiert sein. Als Substituenten bieten sich unter anderem C₁- bis C₄-Alkylgruppen wie Methyl-, Ethyl-, i- bzw. n-Propyl- und n-, i- bzw. t-Butylgruppen oder Fluor an.

Bevorzugte Dicarbonsäuren sind substituierte, insbesondere unsubstituierte 2,6-Naphthalindicarbonsäure, Terephthalsäure und Isophthalsäure oder deren Mischungen. Bevorzugt sind darunter Terephthalsäure oder Isophthalsäure oder deren Mischungen zu verstehen. Terephthalsäure als alleinige monomere Dicarbonsäure wird häufig eingesetzt.

Polyalkylenterephthalate enthalten neben aromatischen Resten, die sich von entsprechenden Dicarbonsäuren ableiten, aliphatische Kohlenwasserstoffreste, die sich von den entsprechenden Alkylendiolen ableiten. Die Alkylendiole können verzweigt oder unverzweigt also linear sein. Verzweigte Polyalkylenterephthalate umfassen verzweigte Kohlenwasserstoffreste, während lineare Polyalkylenterephthalate unverzweigte Kohlenwasserstoffreste umfassen. In den erfindungsgemäßen thermoplastischen Zusammensetzungen werden bevorzugt lineare Polyalkylenterephthalate eingesetzt.

Von den Alkylendiolen werden Diole mit 2 bis 6 Kohlenstoffatomen bevorzugt, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol oder Neopentylglykol oder deren Mischungen.

In einer bevorzugten Ausführungsform der Erfindung kann die Komponente A Polyethylenterephthalat, 1,3-Polypropylenterephthalat, 1,4-Polybutylenterephthalat Polyethylennaphthalat, 1,4-Polybutylennaphthalat, 1,3-Polypropylenterephthalat Poly(cyclohexandimethanolterephthalat), oder deren Mischungen umfassen.

Diese Polyalkylenterephthalate haben in der Regel eine in Phenol/Tetrachlorkohlenstoff (1/1-Volumenverhältniss) gemessene Grenzviskosität von 0.4 dL/g bis 2.0 dL/g. Die Polyalkylenterephthalate haben in der Regel ein mittleres Molekulargewicht von 5000 bis 130000 g/mol (bestimmt mittels Gelpermeationschromatographie in Chloroform/Hexafluoroisopropanol (5/95, Volumenverhältniss) bei 25°C gemessen gegen einen Polystyrol-Standart)

Erfindungsgemäß umfasst die thermoplastische Zusammensetzung ein Elastomer (Komponente B) ausgewählt aus der Gruppe der Polyalkylenterephthalat-Polyester-Urethane b1), Polyalkylenterephthalat-Polyether-Urethane b2), Polyalkylenterephthalat-Polyether b3), Polyalkylenterephthalat-Polyester b4) und deren Mischungen.

Ein Elastomer ist ein Copolymer, bei dem hart-Segmente und weich-Segmente kombiniert werden können. Hart-Segmente zeichnen sich im Allgemeinen durch steife gestreckte Abschnitte aus. Weich-Segmente weisen in der Regel stark zusammen geknäulte Bereiche auf. Hart-Segmente lagern sich meist längs zueinander an und bauen Nebenvalenzen auf, was den Zusammenhalt zwischen den Polymersträngen erhöht. Weich-Segmente können gestreckt werden und sorgen somit für Elastizität des Bereichs.

Das Elastomer b1) umfasst Polyalkylenterephthalate als hart-Segment und Polyester-Urethan als weich-Segment (Formel siehe WO03014179, S. 9-S.10).

Üblicherweise wird zur Herstellung zunächst ein Polyalkylenterephthalat mit ein oder mehreren Hydroxyverbindungen umgesetzt, wobei vorzugsweise ein oder mehrere niedermolekulare Diole verwendet werden, die in der Regel ein Molekulargewicht von 62 g/mol bis 500 g/mol aufweisen (i), um eine Polyalkylenterephthalat-Hydroxyverbindung zu bilden. Diese Polyalkylenterephthalat-Hydroxyverbindung kann in Folge zunächst mit ein oder mehreren Polyesterolen, die im Allgemeinen ein Molekulargewicht von mehr als 500 bis 8000 g/mol, bevorzugt 700 bis 6000 g/mol, insbesondere 800 bis 4000 g/mol aufweisen ii) und dann mit einem oder einer Mischung unterschiedlicher Isocyanaten umgesetzt werden (iii).

Das hart-Segment des thermoplastischen Elastomers b1) kann sich von dem Polyalkylenterephthalat A im strukturellen Aufbau und/oder der Verteilung unterscheiden. Das hart-Segment kann aber auch den gleichen strukturellen Aufbau haben wie A. Zum Beispiel kann das hart-Segment des thermoplastischen Elastomers ein Polyalkylenterephthalat auf der Basis von Terephthalsäure und einem alkylenischen Diol mit 2 bis 15 C-Atomen sein. Bevorzugt ist das harte Segment ein Polybutylenterephthalat, insbesondere ein Poly1,4-butylenterephthalat. Das oder die Polyalkylenterephthalat/e Segment hat/haben im Allgemeinen ein mittleres Molekulargewicht von 1000 bis 5000 g/mol (bestimmt mittels Gelpermeationschromatographie in Chloroform/Hexafluoroisopropanol (5/95, Volumenverhältniss) bei 25°C gemessen gegen einen Polystyrol-Standart).

Zur Bildung der Polyalkylenterephthalat-Hydroxyverbindung kann in dem Schritt (i) das thermoplastische Polyalkylenterephthalat z.B. mit einem oder mehreren, bevorzugt einem allgemein bekannten niedermolekularen Diol, insbesondere mit solchen mit einem Molekulargewicht von 62 bis 500 g/mol umgesetzt werden, beispielsweise Ethylenglykol, 1,3-Propandiol, 1,4-Butandiol, 1,S-Pentandiol, 1,6-Hexandiol, Heptandiol, Oktandiol, bevorzugt Butan-1,4-diol und/oder Ethan-1,2-diol.

Das Gewichtsverhältnis von Polyalkylenterephthalat zu Diol in dem Schritt (i) beträgt üblicherweise 100 : 1 bis 100 : 10, bevorzugt 100 : 1,5 bis 100 : 8,0. Die Polyalkylenterephthalat-Hydroxyverbindung als Umsetzungsprodukt aus (i) weist bevorzugt ein Molekulargewicht von 1000 g/mol bis 5000 g/mol auf. Der Schmelzpunkt des Polyalkylenterephthalat-Hydroxyverbindung als Umsetzungsprodukt aus (i) beträgt bevorzugt 150 °C bis 260 °C, besonders bevorzugt 151 °C bis 260 °C, insbesondere 165 bis 245°C, d.h. dass die Polyalkylenterephthalat-Hydroxyverbindung des thermoplastischen Polyalkylenterephthalat mit dem Diol im Schritt (i) Verbindungen mit dem genannten Schmelzpunkt enthält, die in dem anschließenden Schritt (ii) eingesetzt werden.

In Schritt ii) kann die Polyalkylenterephthalat-Hydroxyverbindung beispielsweise mit aliphatischen Polyesterolen mit Molekulargewichten von mehr als 500 bis 8000, bevorzugt 700 bis 6000, insbesondere 800 bis 4000 umgesetzt werden. Die Polyesterole weisen bevorzugt eine mittlere Funktionalität von 1,8 bis 2,6, bevorzugt 1,9 bis 2,2, insbesondere 2 auf. Unter dem Ausdruck "Funktionalität" ist insbesondere die Anzahl an aktiven Wasserstoffatomen, insbesondere Hydroxylgruppen, zu verstehen.

Bevorzugt werden Polyesterole eingesetzt, die erhältlich sind durch Umsetzung von Butandiol und Hexandiol als Diol mit Adipinsäure als Dicarbonsäure, wobei das Gewichtsverhältnis von Butandiol zu Hexandiol bevorzugt 2 zu 1 beträgt. Bevorzugt als Polyesterol ist des weiteren Polytetrahydrofuran mit einem Molekulargewicht von 750 bis 2500 g/mol, bevorzugt 750 bis 1200 g/mol.

Durch die Umsetzung des thermoplastischen Polyalkylenterephthalats mit dem Diol in dem Schritt (i) zur Polyalkylenterephthalat-Hydroxyverbindung und der dann folgenden Umsetzung mit dem Polyesterol in dem Schritt ii) weist das Zwischenprodukt freie Hydroxylgruppen auf, die in dem weiteren Schritt (iii) mit Isocyanat zu dem Elastomer b1), dem Polyalkylenterephthalat-Polyester-Urethan, weiterverarbeitet wird.

Als Isocyanate werden im Allgemeinen übliche aliphatische, cycloaliphatische, araliphatische und/oder aromatische Isocyanate, bevorzugt Diioscyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexan-diisocyanat, 4,4'-, 2,4'- und/oder 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandüsocyanat und/oder Phenylendiisocyanat, bevorzugt 2,2'-, 2,4'- und/oder 4,4'-Diphenylmethandiisocyanat (NDI) und/oder Hexamethylendiisocyanat (HDI).

Als Polyalkylenterephthalat-Polyester-Urethan b1) eignen sich zum Beispiel statistisch verteilte Copolymere mit einem Anteil an Weichsegment von 10 Gew.- % bis 35 Gew.-%.

Das Polyalkylenterephthalat-Polyester-Urethan kann durch dem Fachmann bekannte Verfahren wie durch eine Batch-Synthese oder Reaktion im Extruder hergestellt werden.

Eine mögliche Synthese dieses thermoplastischen Elastomers b1) bestehend aus einem harten Segment und einem weichen Segment wurde in WO 03 014 179 (S. 7, Z. 32 bis S. 8, Z. 42, S.13 bis S.18) beschrieben.

Das Elastomer b2) umfasst Polyalkylenterephthalate als hart-Segment und Polyether-Urethan als weich-Segment. Hierzu kann eine Polyalkylenterephthalat-Hydroxyverbindung wie sie oben beschrieben wurde mit einem oder mehreren Polyetherolen umgesetzt werden. Diese Polyetherole weisen in der Regel Molekulargewichte von mehr als 500 g/mol bis 8000 g/mol auf, bevorzugt 700 bis 6000 g/mol, insbesondere 800 bis 4000 g/mol. Die Polyetherolen haben bevorzugt eine mittlere Funktionalität von 1,8 bis 2,6, bevorzugt 1,9 bis 2,2, insbesondere 2.

Durch die Umsetzung des thermoplastischen Polyalkylenterephthalats mit dem Diol in dem Schritt (i) zur Polyalkalenterephthalat-Hydroxyverbindung und der dann folgenden Umsetzung mit dem Polyetherol in dem Schritt ii) weist das Zwischenprodukt freie Hydroxylgruppen auf die in dem weiteren Schritt (iii) mit Isocyanat zu dem eigentlichen Produkt, dem Polyalkylenterephthalat-Polyether-Urethan, weiterverarbeitet wird. Die Umsetzung erfolgt dabei wie für die Herstellung der Elastomere b1) beschrieben.

Als Polyalkylenterephthalat-Polyether-Urethan b2) eignen sich zum Beispiel statistisch verteilte Copolymere mit einem Anteil an Weichsegment von 10 Gew.- % bis 35 Gew.-%.

Das Polyalkylenterephthalat-Polyether-Urethan kann durch dem Fachmann bekannte Verfahren wie durch eine Batch-Synthese oder Reaktion im Extruder hergestellt werden.

In einer weiteren Ausführungsform der Erfindung umfasst die thermoplastische Zusammensetzung ein Elastomer b3) umfassend einen Polyalkylenterephthalat-Polyether. Derartige Produkte sind in der Literatur bekannt oder sind mittels an sich bekannter Methoden zugänglich. Zum Beispiel werden Polyester-Polyether in den US-Schriften 3,651,014, 3,784,520, 4,185,003 und 4,136,090 beschrieben.

Das harte Segment des Elastomers b3) kann sich von dem Polyalkylenterephthalat A im strukturellen Aufbau und/oder der Verteilung unterscheiden. Das harte Segment kann aber auch den gleichen strukturellen Aufbau haben wie A. Zum Beispiel kann das harte Segment des thermoplastischen Elastomers ein Polyester auf der Basis von Terephthalsäure und einem alkylenischen Diol mit 2 bis 15 C-Atomen sein. Bevorzugt ist das harte Segment ein Polybutylenterephthalat.

Das weiche Polyether Segment des thermoplastischen Elastomers (b2) kann erfindungsgemäß ein Polyester-Polyether sein. Unter Polyester-Polyethern werden gemäß dieser Erfindung Verbindungen verstanden, die sich von Poly(alkylen)etherglycolen und kurzkettigen niedermolekularen Diolen und Dicarbonsäuren ableiten.

Eine mögliche Strukturformel wird in der Schrift WO2007/009930, S. 29, Z. 1-15 gezeigt. Es versteht sich, dass auch Mischungen von mehreren Poly(alkylenoxiden)glykolen, mehreren Diolen und/oder mehreren Dicarbonsäuren eingesetzt werden können.

Die Poly(alkylenoxid)glykole haben vorzugsweise einen Schmelzpunkt von weniger als 55 °C und ein Kohlenstoff/Sauerstoffverhältnis von vorzugsweise 2 bis 10, insbesondere von 2 bis 6. Beispiele für Poly(alkylenoxid)glykole sind Poly(ethylenoxid)glykol, Poly(1,2-propylenoxid)glykol, Poly(1,3-propylenenoxid)glykol, Poly(1,2-butylenoxid)glykol, Poly(1,3-butylenoxid)glykol, Poly(1,4-butylenoxid)glykol, Poly(pentemethylenoxid)glykol, Poly(hexamethylenoxid)glykol, Poly(heptamethylenoxid)glykol, Poly(heptamethylenoxid)glykol, Poly(octamethylenoxid)glykol, Poly(nonamethylenoxid)glykol sowie statistische oder Blockcopolymere aus verschiedenen der vorstehend genannten Glykole. Bevorzugt werden Poly(ethylenoxid)glykol, Poly(1,2-propylenoxid)glykol, Poly(1,3-propylenenoxid)glykol und Poly(1,4-butylenoxid)glykol sowie deren Mischungen eingesetzt. Das langkettige Poly(alkylenoxid)glykol kann ein bevorzugtes Molekulargewicht von 400 bis 3000 g/mol haben. Das Molekulargewicht lässt sich aus der OH-Zahl bestimmen. Hierzu wird die OH-Zahl kann mittels Tritration festgestellt. Mit Hilfe der Formel Mw ≈ 56.1 × Funktionalität × 1000 / OH-Zahl in mg KOH/g) kann so das Molekulargewicht Mw bestimmt werden. (Carey, M.; Wellons, S.; Elder, D. Journal of Cellular Plastics 1984, 20, 42.)

Als Diole kommen in der Regel ganz allgemein niedermolekulare Diole mit Molekulargewichten von vorzugsweise weniger als 250 in Betracht. Diese können lineare oder verzweigte, cycloaliphatische oder aromatische Grundstruktur aufweisen.

Insbesondere sind Diole mit 2 bis 15 Kohlenstoffatomen bevorzugt. Beispielhaft seien hier 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol sowie dessen Isomere genannt. Von diesen werden insbesondere aliphatische Diole mit 2 bis 8, insbesondere 2 bis 4 Kohlenstoffatomen bevorzugt insbesondere 1,3-Propandiol und/oder 1,4-Butandiol. Auch ungesättigte Diole haben sich insbesondere in Mischungen mit zuvor genannten Diolen, als geeignet herausgestellt. Hier ist insbesondere 2-Buten-1,4-diol hervorzuheben.

Als Dicarbonsäuren werden vorzugsweise Verbindungen mit Molekulargewichten von weniger als 300 eingesetzt. Die Dicarbonsäuren können aromatische, aliphatische oder cycloaliphatische Verbindungen sein und Substituenten aufweisen, die im Verlaufe der Polymerisation nicht stören. Die Dicarbonsäuren können auch aromatische Verbindungen sein und Substituenten aufweisen, solange das resultierende Polymer ein weich-Segment sein kann.

Als Beispiele für aromatische Dicarbonsäuren sei Terephthalsäure, Isophthalsäure und deren Derivate genannt. Als aliphatische Dicarbonsäuren, die eingesetzt werden können, sind Oxalsäure, Fumarsäure, Maleinsäure, Citraconsäure, Sebacinsäure, Adipinsäure, Glutarsäure, Succinsäure, Azelainsäure und ähnliche genannt. Auch Mischungen verschiedener aliphatischer Dicarbonsäuren können eingesetzt werden. Auch können an Stelle der Säuren deren ersterbildende Derivate eingesetzt werden. Bevorzugt sind aromatische Dicarbonsäuren. Eine mögliche Synthese des thermoplastischen Elastomers (b2) wird in US 3 651 014 beschrieben.

Als Polyalkylenterephthalat-Polyether b3) eignen sich verschiedene Blockcopolymere.

In einer weiteren Ausführungsform der Erfindung umfasst die thermoplastische Zusammensetzung ein Elastomer b4), welches ein Polyalkylenterephthalat-Polyester sein kann.

So kann b4) ein Copolymer umfassend ein Gemisch aus einer aromatischen Disäure und einer aliphatische Disäure sein, das mit einem Diol versetzt wird.

Die aromatischen Disäuren können 2,6-Naphthalindicarbonsäure, Terephthalsäure und 1-sophthalsäure oder deren Mischungen sein.

Die aliphatischen Disäuren können Oxalsäure, Fumarsäure, Maleinsäure, Citraconsäure, Sebacinsäure, Adipinsäure, Bernsteinsäure, Sebazinsäure, Glutarsäure, Succinsäure und Azelainsäure oder deren Mischungen sein.

Die Diole können C2-C15 Diole, zum Beispiel 1,2-Ethandiol, 1,3-Propandiol, 1,2-Propandiol, 1,4-Butandiol, 1,3-Butandiol, 1,2-Butandiol, 1,5-Pentandiol, 2,2-Dimethyl-1,3-propandiol, 1,6-Hexandiol und ihre Isomere sein.

Das molare Verhältnis zwischen aromatischer Disäure und aliphatischer Disäure kann in weiten Bereichen von 9 / 1 bis 1 / 9 variiert werden.

Das Polyalkylenterephthalat-Polyester kann durch dem Fachmann bekannte Verfahren wie durch eine Batch-Synthese oder Reaktion im Extruder hergestellt werden.

Zudem enthält die erfindungsgemäße thermoplastische Zusammensetzung ein halogenfreies Flammschutzmittel (C), ausgewählt aus der Gruppe der stickstoffhaltigen oder phosphorhaltigen Flammschutzmittel oder der P- und N-haltigen Flammschutzmittel oder deren Mischungen.

Halogenfrei ist in diesem Zusammenhang entsprechend den Definitionen der "International E-lectronical Commission" (IEC 61249-2-21) und der "Japan Printed Circuit Association" (JPCA-ES-01-1999) zu verstehen, die unter halogenfreien Materialen solche verstehen, die weitestgehend chlor- und bromfrei sind.

Aus der Gruppe der stickstoffhaltigen Flammschutzmittel (c1) kann die thermoplastische Zusammensetzung eine halogenfreie Verbindung aus der Gruppe der stickstoffhaltigen Heterocyclen mit mindestens einem Stickstoffatom enthalten. Auch kann die thermoplastische Zusammensetzung Gemische der stickstoffhaltigen Heterocyclen mit mindestens einem Stickstoffatom enthalten.

Zu den gemäß der Erfindung bevorzugt geeigneten Flammschutzmitteln zählt Melamincyanurat. Melamincyanurat ist ein Reaktionsprodukt aus vorzugsweise äquimolaren Mengen von Melamin (Formel I) und Cyanursäure bzw. Isocyanursäure (Formeln Ia und Ib)

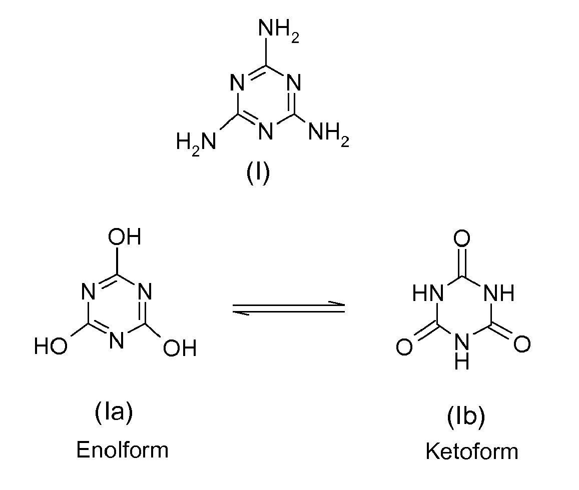

Melamincyanurat kann z.B. durch Umsetzung von wässrigen Lösungen der Ausgangsverbindungen bei 90 bis 100°C erhalten werden.

Weitere geeignete Verbindungen (oft auch als Salze oder Addukte bezeichnet) sind Melamin, Melaminborat, und Melaminoxalat. Auch können Mischungen dieser Salze eingesetzt werden.

Aus der Gruppe der Flammschutzmittel (C) kann die thermoplastische Zusammensetzung erfindungsgemäß auch eine halogenfreie Verbindung aus der Gruppe der P-, N-haltigen Flammschutzmittel (c2) enthalten. Es sind zum Beispiel P-, N-haltige Flammschutzmittel geeignet, wie sie in der WO 2002/96976 beschrieben sind.

Hierbei eignen sich Melaminphosphat prim., -phosphat sec. und -pyrophosphat sec., Neopentylglycolborsäuremelamin sowie polymeres Melaminphosphat (CAS-Nr 56386-64-2). Geeignete Guanidinsalze sind

| | CAS-N r. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. von 200 bis 1000 bevorzugt von 600 bis 800, und Tris(hydroxyethyl)isocyanurat (THEIC) der Formel II

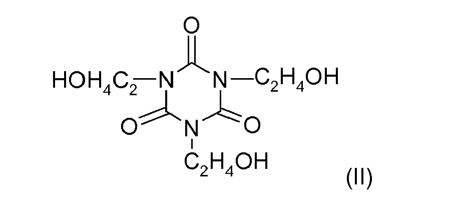

Weiterhin geeignet sind Benzoguanamin-Verbindungen der Formel III 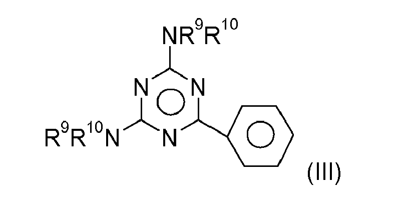 in der R⁹, R¹⁰ geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel IV 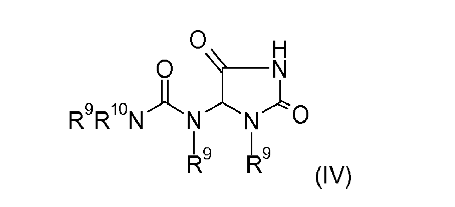 wobei R⁹,R¹⁰ die in Formel III angegebene Bedeutung haben sowie deren Salze mit Phosphorsäure, Borsäure und/oder Pyrophosphorsäure sowie Glycolurile der Formel V oder dessen Salze mit den oben genannten Säuren 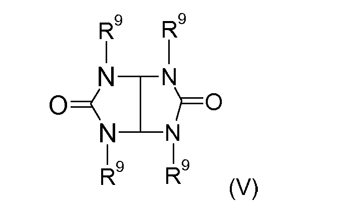 in der R⁹ die in Formel III genannte Bedeutung hat.

Geeignete Produkte sind im Handel oder zum Beispiel gemäß DE-A 196 14 424 erhältlich.

Das gemäß der Erfindung verwendbare Cyanguanidin (Formel VI) wird z.B. durch Umsetzung von Kalkstickstoff (Calciumcyanamid) mit Kohlensäure erhalten, wobei das entstehende Cyanamid bei pH 9 bis 10 zu Cyanguanidin dimerisiert.

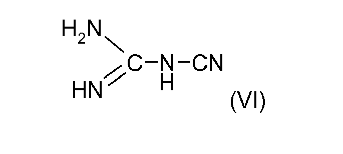

Als phosphorhaltige Verbindungen (c3) sind Phosphinsäuresalze der Formel (VII) und/oder Diphosphinsäuresalze der Formel (VIII) und/oder deren Polymere bevorzugt, Aus der großen Zahl von erfindungsgemäß geeigneten phosphorhaltigen Verbindungen seien nur einige Beispiele erwähnt. 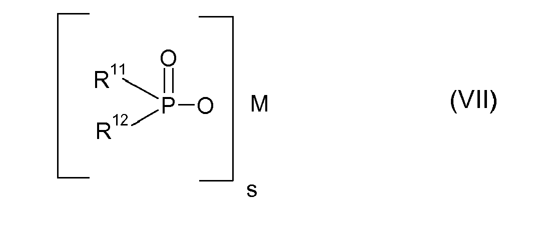 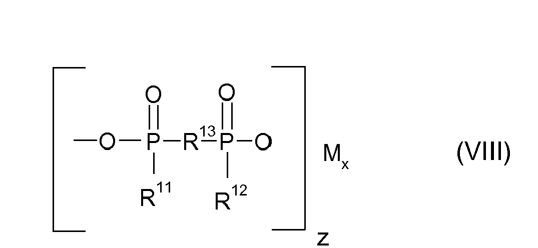 wobei die Substituenten folgende Bedeutung haben:
- R¹¹, R¹²: Wasserstoff, C₁- bis C₆-Alkyl, vorzugsweise C₁- bis C₄-Alkyl, linear oder verzweigt, z.B. Methyl, Ethyl, n-Propyl, iso-Propyl, n-Butyl, tert.-Butyl, n-Pentyl; Phenyl; wobei bevorzugt mindestens ein Rest R¹¹ oder R¹², insbesondere R¹¹ und R¹² Wasserstoff ist;
- R¹³: C₁- bis C₁₀-Alkylen, linear oder verzweigt, z.B. Methylen, Ethylen, n-Propylen, iso-Propylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methyl-naphthylen, Ethyl-naphthylen, tert.-Butyl-naphthylen; Arylalkylen, z.B. Phenyl-methylen, Phenyl-ethylen, Phenyl-propylen, Phenyl-butylen;
- M: ein Erdalkali-, Alkalimetall, Al, Zn, Fe, Mg, Ca;
- S: eine ganze Zahl von 1 bis 3;
- Z: eine ganze Zahl von 1 und 3 und
- X: 1 oder 2.

Besonders bevorzugt sind Verbindungen der Formel VII, in denen R¹¹ und R¹² Wasserstoff, Methyl, Ethyl oder Isobutyl sind, wobei M vorzugsweise Ca, Zn, Mg oder Al ist und Aluminium Diethylphosphinat und Aluminium Hypophosphite ganz besonders bevorzugt sind.

Phosphor der Wertigkeitsstufe +0 ist der elementare Phosphor. In Betracht kommen roter und schwarzer Phosphor. Bevorzugt ist roter Phosphor.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenyl-phosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenyl-phosphat, Phenylmethylhydrogenphosphat, Di(dodecyl)-p-tolylphosphat, p-Tolyl-bis(2,5,5-trimethylhexyl)phosphat oder 2-Ethylhexyldiphenylphosphat. Besonders geeignet sind Phosphorverbindungen, bei denen jeder Rest ein Aryloxi-Rest ist. Ganz besonders geeignet ist Triphenylphosphat und/oder Re-sorcinol-bis-(diphenylphosphat) und/oder dessen kernsubstituierten Derivate der allgemeinen Formel X (RDP): 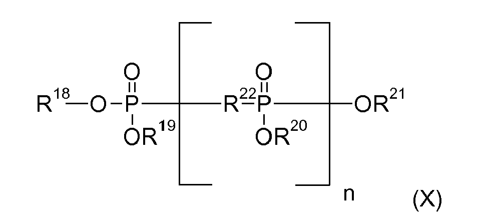 in der die Substituenten folgende Bedeutung haben:
- R¹⁸-R²¹: ein aromatischer Rest mit 6 bis 20 C-Atomen, bevorzugt ein Phenylrest, welcher mit Alkylgruppen mit 1 bis 4 C-Atomen, bevorzugt Methyl, substituiert sein kann,
- R²²: ein zweiwertiger Phenolrest, bevorzugt 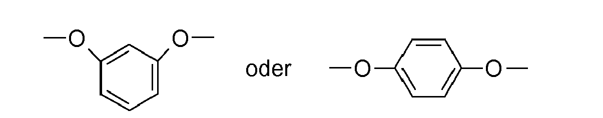
und n einen Durchschnittswert von 0,1 bis 100, bevorzugt von 0,5 bis 50, insbesondere von 0,8 bis 10 und ganz besonders von 1 bis 5.

Die derzeit im Handel erhältlichen RPD-Produkte sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Erfindungsgemäß kann die thermoplastische Zusammensetzung einen faserförmigen, späroiden und oder plättchenförmigen Verstärkungszusatz (D) enthalten. Dieser Verstärkungszusatz kann z.B. Glasfasern, Kohlenstoff-Fasern, Aramid-Fasern, Kaliumtitanat-Fasern, Glaskugeln, amorphe Kieselsäure, Calciumsilicat, Magnesiumcarbonat, Kaoline, Kreide, gepulverter Quarz, Glimmer, Bariumsulfat, Felspat, Metallhydroxide, Metalloxide, ähnliche Mineralfüllstoffe oder eine Keramik sein. Auch Mischungen der Verstärkungszusätze sind möglich.

Des weiteren kann die erfindungsgemäße thermoplastische Zusammensetzung mindestens einen Zusatzstoff enthalten, ausgewählt aus der Gruppe der Stabilisatoren, Antistatika, Keimbildner, Verarbeitungshilfsmittel, Schlagzähigkeitsverbesserer, Gleit- und Entformungshilfen, Pigmente und Antioxidantien.

Als UV-Stabilisatoren können zum Beispiel substituierte Resorcine, Salicylate, Benzotriazole und Benzophenonen verwendet werden.

Als anorganische Pigmente eigenen sich beispielsweise Titandioxid, Ultramarinblau und/oder Ruß, während als organische Pigmente z.B. Perylene, Phthalocyanine und/oder Chinacridone beigemischt werden können. Auch eigenen sich Farbstoffe wie Nigrosin und/oder Antrachione zum Färben der thermoplastischen Zusammensetzung.

Als Gleit- und Entformunsgmittel können langkettige Fettsäuren (z.B. Stearinsäure) oder deren Salze (z.B.Ca-Stearat) eingesetzt werden. Gleit- und Entformunsgmittel werden zumeist in Gewichtsanteilen von bis zu 1 % in Bezug auf die Gesamtmasse der thermoplastischen Zusammensetzung eingesetzt.

Als Weichmacher können insbesondere Phthalsäuredioctylester, Phthalsäuredibenzylester, Phthalsäurebutylbenzylester, Kohlenwasserstofföle, und/oder N-(n-Butyl)benzolsulfonamid dienen.

Die erfindungsgemäße thermoplastische Zusammensetzung kann fluorhaltige Ethylenpolymerisate enthalten. Hierbei handelt es sich bevorzugt um Polymerisate des Ethylens mit einem Fluorgehalt von 55 bis 76 Gew.-%. Beispiele hierfür sind Polytetrafluorethylen (PTFE), Tetrafluorethylenhexafluorpropylen-Copolymere oder Tetrafluorethylen-Copolymerisate mit kleineren Anteilen copolymerisierbarer ethylenisch ungesättigter Monomerer. Diese werden z.B. von Schildknecht in "Vinyl and Related Polymers", Wiley-Verlag, 1952, Seite 484 bis Seite 494 beschrieben.

Dieser Zusatz kann sowohl der thermoplastischen Zusammensetzung über eine Beimischung zu einer Komponente zugefügt werden als auch als gesonderte Beimischung zur gesamten thermoplastischen Zusammensetzung beigefügt werden.

Vorzugsweise enthält die erfindungsgemäße Zusammensetzung keine fluorhaltigen Ethylenpolymerisate.

Sofern die erfindungsgemäße Zusammensetzung einen oder mehrere Zusatzstoffe enthält, liegt deren Anteil meist bei nicht mehr als 5 Gew.-% bezogen auf die Gesamtmasse der thermoplastischen Zusammensetzung. Meist beträgt der Anteil and Zusatzstoffen bei wenigstens 0.1 Gew.-% bezogen auf die Gesamtmasse der thermoplastischen Zusammensetzung.

Die Komponenten (A), (B), (C) und (D) können in verschiedenen Gewichtsanteilen vermischt werden. Die folgenden Angaben zu den Gewichtprozenten beziehen sich auf die Gesamtmasse der thermoplastischen Zusammensetzung. In einer thermoplastischen Zusammensetzung ergibt die Addition der einzelnen Gewichtsprozent-Angaben 100 Gew.-%.

Bezogen auf die Gesamtmasse enthalten erfindungsgemäße Zusammensetzungen zum Beispiel von 30 bis 70 Gew.-% der Komponente (A). Bevorzugt kann (A) in Gewichtsanteilen von 40 bis 60 Gew.-%, insbesondere von 40 bis 55 Gew.-% bezogen auf die Gesamtmasse der thermoplastischen Zusammensetzung eingesetzt werden.

Das thermoplastische Elastomer (B) kann in Mengen von 1 bis 50 Gew.-% eingesetzt werden. Bevorzugt kann das thermoplastische Elastomer in Mengen von 1 bis 30 Gew.-% insbesondere von 3 bis 15 Gew.-% bezogen auf die Gesamtmasse der thermoplastischen Zusammensetzung eingesetzt werden.

Ein halogenfreies Flammschutzmittel (C), ausgewählt aus der Gruppe c1) der stickstoffhaltigen Flammschutzmittel, c2) der stickstoff- und phosphorhaltigen Flammschutzmittel oder c3) der phosphorhaltigen Flammschutzmittel und deren Mischungen kann in Gewichtsanteilen von 5 bis 35 Gew.-% bezogen auf die Gesamtmasse der thermoplastischen Zusammensetzung zugesetzt werden. Bevorzugt wird das Flammschutzmittel in Gewichtsanteilen von 5 bis 30 Gew.-%, insbesondere von 5 bis 25 Gew.-% zugesetzt.

Sofern enthalten kann der Verstärkungszusatz (D) eingesetzt werden in Gewichtsanteilen von 1 bis 50 Gew.-% in Bezug auf die Gesamtmasse der thermoplastischen Zusammensetzung. In einer bevorzugten Ausführungsform enthält die thermoplastische Zusammensetzung einen Verstärkungszusatz in Gewichtsanteilen von 15 bis 60 Gew.-%, insbesondere von 15 bis 30 Gew.-% bezogen auf die Gesamtmasse der thermoplastischen Zusammensetzung.

Zu den bevorzugten erfindungsgemäßen thermoplastischen Zusammensetzungen gehören die folgenden Zusammensetzungen.

| Thermoplastische Zusammensetzung^{a} | Komponente A [Gew.-%] | Komponente B [Gew.-%] | Komponente C [Gew.-%] | Komponente D [Gew.-%] |
|---|---|---|---|---|
| 1 | 40-55% | b1: 3-15 | c1: 5-25% | 15-30 % |
| 2 | 40-55% | b1: 3-15 | c2: 5-25% | 15-30 % |
| 3 | 40-55% | b1: 3-15 | c3: 5-25% | 15-30 % |
| 4 | 40-55% | b2: 3-15 | c1: 5-25% | 15-30 % |
| 5 | 40-55% | b2: 3-15 | c2: 5-25% | 15-30 % |
| 6 | 40-55% | b2: 3-15 | c3: 5-25% | 15-30 % |
| 7 | 40-55% | b3: 3-15 | c1: 5-25% | 15-30 % |
| 8 | 40-55% | b3: 3-15 | c2: 5-25% | 15-30 % |
| 9 | 40-55% | b3: 3-15 | c3: 5-25% | 15-30 % |
| 10 | 40-55% | b4: 3-15 | c1: 5-25% | 15-30 % |
| 11 | 40-55% | b4: 3-15 | c2: 5-25% | 15-30 % |
| 12 | 40-55% | b4: 3-15 | c3: 5-25% | 15-30 % |

| | | | | |
|---|---|---|---|---|
| a: In einer thermoplastischen Zusammensetzung ergibt die Addition der einzelnen Gewichtsprozent-Angaben 100 Gew.-%. Die jeweilige thermoplastische Zusammensetzung kann darüber hinaus Zusatzstoffe enthalten. | | | | |

Die erfindungsgemäße thermoplastische Zusammensetzung kann nach den bekannten Verfahren hergestellt werden. Hierzu werden die Ausgangskomponenten z.B. in üblichen Mischvorrichtungen wie Schneckenextrudern, Brabender-Mühlen oder Banbury-Mühlen gemischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel in Bereichen von 240 °C bis 265 °C. Die Temperatur bezieht sich auf die Temperatur des Extruders.

Die mechanischen Eigenschaften der erfindungsgemäßen thermoplastischen Zusammensetzung begünstigen die Verwendung der thermoplastischen Zusammensetzung zur Herstellungen von Fasern, Folien und/oder Formkörpern. Insbesondere eignet sich die thermoplastische Zusammensetzung für die Herstellung von speziellen Formkörpern im Fahrzeug und Gerätebau zum Beispiel für industrielle oder Verbraucher nahe Zwecke. So kann die thermoplastische Zusammensetzung zur Produktion von Elektronikteilen, Gehäusen, Gehäuseteilen, Abdeckklappen, Stossfängern, Spoilern, Karosserieteilen, Dämpfungselementen, Federn, Griffen, Ladeluftrohren, Kraftfahrzeuginnenanwendungen wie Instrumententafeln, Teile von Instrumententafeln, Instrumententafelträger, Abdeckungen, Luftkanäle, Lufteinlassgitter, Schiebedachtraversen, Dachrahmen, Anbauteile, insbesondere die Mittelkonsole als Teil des Handschuhfachs oder auch Tachoholzen verwendet werden.

Die erfindungsgemäße thermoplastische Zusammensetzung kann als Überzugmittel für Fasern, Folien und/oder Formkörper verwendet werden. Unter Formkörper werden dreidimensional feste Gegenstände verstanden, die sich anbieten, mit einer thermoplastischen Zusammensetzung überzogen zu werden. Die Dicke solcher Beschichtungen liegt in der Regel in Bereichen von 0.1 bis 3.0 cm, bevorzugt von 0.1 bis 2.0 cm, ganz besonders bevorzugt von 0.5 bis 2.0 cm. Derartige Beschichtungen können durch dem Fachmann bekannte Verfahren hergestellt werden.

Die erfindungsgemäße thermoplastische Zusammensetzung kann in Verfahren zur Herstellung von industriell hergestellten flammgehemmten Materialen eingesetzt werden.

Die erfindungsgemäße thermoplastische Zusammensetzung weist flammhemmende Wirkung auf, die höchsten Ansprüchen genügt. Zum Nachweis der flammhemmenden Eigenschaften wurden Formkörper hergestellt, die vor dem Hintergrund der guten Verarbeitbarkeit überraschender weise den Brandtest UL 94 mit der Klasse V0 oder V2 bestanden. Die thermoplastische Zusammensetzung weist einen überraschend günstigen Schmelzflussindex sowie eine hohe Bruch und Schlagfestigkeit auf Beispiele

Verwendete Materialien:
Komponente A:
PBT 1: Poly(butylenterephthalat), mit einer Viskositätszahl von 130 mL/g (Messung durchgeführt mit einer 0.5 Gew.-% Lösung in einem Phenol/o-Dichlorobenzol (1/1)-Gemisch bei 23 °C), Ultradur® B4520 der Firma BASF SE.
PBT 2: Poly(butylenterephthalat), mit einer Viskositätszahl von 107 mL/g (Messung durchgeführt mit einer 0.5 Gew.-% Lösung in einem Phenol/o-Dichlorobenzol (1/1)-Gemisch bei 23 °C) Ultradur® B2550 der Firma BASF SE.
Komponente B:
Komponente b1)
Polyalkylenterephthalat-Polyester-Urethan 1-3: umfassend Poly(butylenterephthalat), Adipatester, Hexamethylendiisocyanat und Butandiol; Härte und Schmelzindex (Melt flow index (MFI)) siehe Tabelle.
Polyalkylenterephthalat-Polyester-Urethan 1
   PBT: 60 %
   Polyol: 25 % Polyester aus Adipinsäure, Butandiol und 2-Methylpropandiol (1+1), Mn = 3000 g/mol; OH-Zahl: 38 mg KOH/g
   Isocyanat: 9 % Hexamethylendiisocyanat
   Butandiol-1,4: 3,6 % Additive (Fein gepudertes Talkum, sterisch gehindertes Phenol als Antioxidant, Carbodiimid als Hydrolysestabilisator, Gleitadditiv, Antiblockmittel): 3,4 %
Polyalkylenterephthalat-Polyester-Urethan 2
   PBT: 67,5 %
   Polyol: 16 % Polyester of adipic acid, Butandiol + 2-Methylpropandiol (1 +1), Mn = 3000 g/mol; OH-Zahl: 38 mg KOH/g
   Isocyanat: 9 % Hexamethylendiisocyanat
   Butandiol-1,4: 4,1 %
   Additive (Fein gepudertes Talkum, sterisch gehindertes Phenol als Antioxidant, Carbodiimid als Hydrolysestabilisator, Gleitadditiv, Antiblockmittel): 3,4 %
Polyalkylenterephthalat-Polyester-Urethan 3
   PBT: 71 %
   Polyol: 12,6 % Polyester of adipic acid, Butandiol + 2-Methylpropandiol (1+1), Mn = 3000 g/mol; OH-Zahl: 38 mg KOH/g
   Isocyanat: 9 % Hexamethylendiisocyanat
   Butandiol-1,4: 4,3 %
   Additive (Fein gepudertes Talkum, sterisch gehindertes Phenol als Antioxidant, Carbodiimid als Hydrolysestabilisator, Gleitadditiv, Antiblockmittel): 3,1 %
Komponente b3)
Polyalkylenterephthalat-Polyether 1 und 2: umfassend Poly(butylenterephthalat) und Poly(tetrahydrofuran); Hytrel® 7246 und Hytrel® 8238, der Firma Dupont Härte und Schmelzindex (Melt flow index (MFI)) siehe Tabelle.
Komponente b4)
Polyalkylenterephthalat-Polyester: umfassend Poly(butylenterephthalat) und Poly(butylenadipat); Ecoflex® FBX 7011 der Firma BASF SE, Härte und Schmelzindex siehe Tabelle.

| Komponente B | Shore D Härte | Schmelzindex (MFI) | | |
|---|---|---|---|---|
| | | bei 230 °C, 2.16 Kg | bei 240 °C, 2.16 Kg | Bei 190 °C, 2.16 Kg |
| b1) Polyalkylen-terephthalat-Polyester-Urethan 1 | 55 | 24 g/10 min | - | - |
| b1) Polyalkylen-terephthalat-Polyester-Urethan 2 | 64 | 38 g/10 min | - | - |
| b1) Polyalkylen-terephthalat-Polyester-Urethan 3 | 66 | 30 g/10 min | - | - |
| b3) Polyalkylen-terephthalat-Polyether 1 | 72 | - | 12.5 g/10 min | - |
| b3) Polyalkylen-terephthalat-Polyether 2 | 82 | - | 12.5 g/10 min | - |
| b4) Polyalkylen-terephthalat-Polyester | 32 | - | - | 5 g/10 min |

Komponente C:
DEPAL: Aluminiumdiethylphosphinat.
MC: Melamincyanurat, Melapur® MC 25 der Firma BASF SE.
MPP: Melaminpolyphosphat, Melapur® 200 der Firma BASF SE.
Komponente D:
Glasfasern: PPG 3786 Glasfasern
Weitere Zusatzstoffe:
   Stabilisator:. Der Stabilisator umfasst verschiedene Antioxidantien: primäre phenolische Antioxidantien und, sekundäre Antioxidantien wie Phosphite und Thiosynergisten) Irganox 1010 der Firma BASF SE.
   Schmiermittel: oxidiertes Polyethylen-Wachs, Luwax® OA5 der Firma BASF SE.
Herstellung, Verarbeitung und Untersuchung der thermoplastischen Zusammensetzung:
   Die jeweiligen Mischungen wurden in einem Doppelschneckenextruder bei 260 °C vermischt und dann nach ISO 294 (Titel: Kunststoffe - Spritzgießen von Probekörpern aus Thermoplasten) spritzgegossen.
   Die Schmelzvolumenfließrate (melt volume-flow rate (MVR)) wurde bei at 275 °C bei einem Gewicht von 2.16 Kg gemessen.
   Der Zugfestigkeitstest und der Kerbschlagtest wurden nach ISO 527 (Titel: Bestimmung der Zugeigenschaften) beziehungsweise nach ISO 179 (Titel: Bestimmung der Charpy-Schlageigenschaften) untersucht.
   Der Test zur Brennbarkeit von Kunststoffen UL94 wurde mit 5 Proben mit einer dicke von 0.8 mm oder 1.6 mm durchgeführt.
   Der Spritzgussdruck basiert auf dem nötigen Druck zur Herstellung der 0.8 mm dicken Proben für den UL94 Test zur Brennbarkeit von Kunststoffen.

Beispiele: Polyalkylenterephthalat-Polyester-Urethan + DEPAL + MC

| Komponente | Vergleichsbeispiel | Beispiel 1 | Beispiel 2 | Beispiel 3 | Beispiel 4 |
|---|---|---|---|---|---|
| PBT 1 [%] | 52.4 | 47.4 | 47.4 | 47.4 | 42.4 |
| DEPAL [%] | 15 | 15 | 15 | 15 | 15 |
| MC [%] | 7.5 | 7.5 | 7.5 | 7.5 | 7.5 |
| Polyalkylenterephthalat-Polyester-Urethan 1 [%] | - | 5 | - | - | - |
| Polyalkylenterephthalat-Polyester-Urethan 2 [%] | - | - | 5 | - | - |
| Polyalkylenterephthalat-Polyester-Urethan 3 [%] | - | - | - | 5 | 10 |
| Stabilizer [%] | 0.1 | 0.1 | 0.1 | 0.1 | 0.1 |
| GF [%] | 25 | 25 | 25 | 25 | 25 |
| Eigenschaften | | | | | |
| UL94 1.6 mm | V0 | V0 | V0 | V0 | V0 |
| UL94 0.8 mm | V2 | V2 | V0 | V2 | V2 |
| MVR (cc/10min) | 20 | 74 | 30 | 27 | 34 |
| Zugfestigkeit [MPa] | 96 | 96 | 98 | 101 | 101 |
| Zugmodul [GPa] | 10.0 | 9.3 | 9.6 | 9.8 | 9.3 |
| Charpy-Schlagzähigkeit [kJ/m²] | 39.7 | 40.5 | 45.6 | 44.1 | 42.4 |

Beispiele: Polyalkylenterephthalat-Polyester-Urethan + DEPAL + MC + MPP

| Komponente | Vergleichsbeispiel | Beispiel 5 | Beispiel 6 | Beispiel 7 | Beispiel 8 | Vergleichsbeispiel c | Beispiel 9 | Beispiel 10 |
|---|---|---|---|---|---|---|---|---|
| PBT 1 [%] | 52.4 | 47.4 | 47.4 | 47.4 | 42.4 | | - | - |
| PBT 2 [%] | - | - | - | - | - | 52.2 | 47.2 | 42.2 |
| DEPAL [%] | 15 | 15 | 15 | 15 | 15 | 15 | 15 | 15 |
| MC [%] | 3.75 | 3.75 | 3.75 | 3.75 | 3.75 | 3.75 | 3.75 | 3.75 |
| MPP [%] | 3.75 | 3.75 | 3.75 | 3.75 | 3.75 | 3.75 | 3.75 | 3.75 |
| Polyalkylenterephthalat-Polyester-Urethan 1 [%] | - | 5 | - | - | - | - | - | - |
| Polyalkylenterephthalat-Polyester-Urethan 2 [%] | - | - | 5 | - | - | - | 5 | 10 |
| Polyalkylenterephthalat-Polyester-Urethan 3 [%] | - | - | - | 5 | 10 | - | - | - |
| Stabilizer [%] | 0.1 | 0.1 | 0.1 | 0.1 | 0.1 | 0.1 | 0.1 | 0.1 |
| Schmiermittel [%] | - | - | - | - | - | 0.3 | 0.3 | 0.3 |
| GF [%] | 25 | 25 | 25 | 25 | 25 | 25 | 25 | 25 |
| Eigenschaften | | | | | | | | |
| UL94 1.6 mm | V0 | V0 | V0 | V0 | V0 | V0 | V0 | V0 |
| UL94 0.8 mm | V0 | V2 | V0 | V0 | V0 | V0 | V0 | V0 |
| MVR [cc/10min] | 12 | 25 | 21 | 30 | 23 | 23 | 30 | 70 |
| Fließspirale [cm] | 16,8 | - | - | - | 21,5 | - | - | - |
| Injection molding pres-sure [bar] | 2412 | 1834 | 1720 | 1753 | 1630 | - | - | - |
| Zugfestigkeit [MPa] | 103 | 97 | 99 | 102 | 100 | 104 | 102 | 95 |
| Zugmodul [GPa] | 10.1 | 9.3 | 9.6 | 9.6 | 9.2 | 10.3 | 9 | 8.5 |
| Kerbschlagtest [kJ/m²] | 48.4 | 44.5 | 43.3 | 45.6 | 47.7 | 40.9 | 43.3 | 40.8 |

Beispiele: Polyalkylenterephthalat-Polyether + DEPAL + MC

| Komponente | Vergleichsbeispiel | Beispiel 11 | Beispiel 12 | Beispiel 13 |
|---|---|---|---|---|
| PBT 1 [%] | 52.4 | 47.4 | 42.4 | 47.4 |
| DEPAL [%] | 15 | 15 | 15 | 15 |
| MC [%] | 7.5 | 7.5 | 7.5 | 7.5 |
| Polyalkylenterephthalat-Polyether 1 [%] | - | 5 | 10 | |
| Polyalkylenterephthalat-Polyether 2 [%] | - | - | - | 5 |
| Stabilizer [%] | 0.1 | 0.1 | 0.1 | 0.1 |
| GF [%] | 25 | 25 | 25 | 25 |
| Eigenschaften | | | | |
| UL94 1.6 mm | V0 | V0 | V0 | V0 |
| UL94 0.8 mm | V2 | V0 | V2 | V2 |
| MVR [cc/10min] | 20 | 23 | 30 | 33 |
| Zugfestigkeit [MPa] | 96 | 98 | 96 | 101 |
| Zugmodul [Gpa] | 10.0 | 9.7 | 9.2 | 9.9 |
| Kerbschlagtest [kJ/m²] | 39.7 | 43.5 | 47 | 43 |

Beispiele: Polyalkylenterephthalat-Polyether + DEPAL + MC + MPP

| Komponente | Vergleichs-beispiel | Beispiel 14 | Beispiel 15 | Beispiel 16 | Referenz c | Beispiel 17 | Beispiel 18 |
|---|---|---|---|---|---|---|---|
| PBT 1 [%] | 52.4 | 47.4 | 42.4 | 47.4 | - | - | - |
| PBT 2 [%] | - | - | - | - | 52.1 | 47.1 | 42.1 |
| DEPAL [%] | 15 | 15 | 15 | 15 | 15 | 15 | 15 |
| MC [%] | 3.75 | 3.75 | 3.75 | 3.75 | 3.75 | 3.75 | 3.75 |
| MPP [%] | 3.75 | 3.75 | 3.75 | 3.75 | 3.75 | 3.75 | 3.75 |
| Polyalkylente-rephthalat-Polyether 1 [%] | - | 5 | 10 | - | - | 5 | 10 |
| Polyalkylente-rephthalat-Polyether 2 [%] | - | - | - | 5 | - | - | - |
| Stabilize [%]r | 0.1 | 0.1 | 0.1 | 0.1 | 0.1 | 0.1 | 0.1 |
| Schmiermittel [%] | - | - | - | - | 0.3 | 0.3 | 0.3 |
| GF [%] | 25 | 25 | 25 | 25 | 25 | 25 | 25 |
| Eigenschaften | | | | | | | |
| UL94 1.6 mm | V0 | V0 | V0 | V0 | V0 | V0 | V0 |
| UL94 0.8 mm | V0 | V0 | V0 | V0 | V0 | V0 | V0 |
| MVR (cc/10min) | 12 | 15 | 16 | 11 | 23 | 28 | 30 |
| Fließspirale (cm) | 16,8 | 17,9 | - | - | - | - | - |
| Injection molding pressure (bar) | 2412 | 2213 | 1896 | 2294 | - | - | - |
| Zugfestigkeit (MPa) | 103 | 98 | 96 | 101 | 104 | 100 | 98 |
| Zugmodul (GPa) | 10.1 | 9.7 | 9.1 | 10.0 | 10.3 | 9.8 | 9.4 |
| Kerbschlagtest (kJ/ₘ₂₎ | 48.4 | 46.4 | 47.9 | 47 | 40.9 | 45.1 | 45.5 |

Beispiele: Polyalkylenterephthalat-Polyester + DEPAL + MC + MPP

| Komponente | Vergleichsbeispiel | Beispiel 19 | Beispiel 20 |
|---|---|---|---|
| PBT 2 [%] | 52.1 | 47.1 | 42.1 |
| DEPAL [%] | 15 | 15 | 15 |
| MC [%] | 3.75 | 3.75 | 3.75 |
| MPP [%] | 3.75 | 3.75 | 3.75 |
| Polyalkylenterephthalat-Polyester [%] | - | 5 | 10 |
| Stabilize [%]r | 0.1 | 0.1 | 0.1 |
| Schmiermittel [%] | 0.3 | 0.3 | 0.3 |
| GF [%] | 25 | 25 | 25 |
| Eigenschaften | | | |
| UL94 1.6 mm | V0 | V0 | V0 |
| UL94 0.8 mm | V0 | V0 | V0 |
| MVR (cc/10min) | 23 | 44 | 52 |
| Fließspirale (cm) | - | - | - |
| Injection molding pressure (bar) | - | - | - |
| Zugfestigkeit (MPa) | 104 | 95 | 95 |
| Zugmodul (GPa) | 10.3 | 8.6 | 8.8 |
| Kerbschlagtest (kJ/m²) | 40.9 | 44.7 | 45 |

Die Proben zeigten gegenüber dem Vergleichsbeispiel verbesserte mechanische Eigenschaften bei verbesserter flammhemmender Wirkung (Vergleichsbeispiel und unter anderem Beispiel 2).

Der Zusatz von Melaminpolyphosphat verbesserte die flammhemmende Wirkung weiter (Beispiel 3 und unter anderem Beispiel 7). Des Weiteren zeigten die Verbindungen gegenüber dem Vergleichsbeispiel verbesserte mechanische Eigenschaften, insbesondere im Schlagtest zeigten die thermoplastischen Zusammensetzungen eine verbesserte Charpy-Schlagzähigkeit (Vergleichsbeispiel und unter anderem Beispiel 9).

In einer weiteren Ausführungsform wurden Mischungen hergestellt, umfassend PBT, Aluminiumdiethylphosphinat (DEPAL) Melamincyanurat jeweils ein Polyalkylenterephthalat-Polyether 1 oder Polyalkylenterephthalat-Polyether 2, sowie dem Stabilisator Irganox 1010 der BASF und Glasfasern des Typs PPG 3786. Die Mengenanteile an Polyalkylenterephthalat-Polyether 1 beziehungsweise Polyalkylenterephthalat-Polyether 2 wurden variiert. Die Proben zeigten gegenüber dem Vergleichsbeispiel verbesserte mechanische Eigenschaften bei verbesserter flammhemmender Wirkung (Vergleichsbeispiel und unter anderem Beispiel 11).

In einer weiteren Ausführungsform wurde diesem Gemisch Melaminpolyphosphat zugesetzt, was die flammhemmende Wirkung weiter verbesserte (Beispiel 12 und unter anderem Beispiel 15). Des Weiteren zeigten die Verbindungen gegenüber dem Vergleichsbeispiel verbesserte mechanische Eigenschaften, insbesondere im Schlagtest zeigten die thermoplastischen Zusammensetzungen eine verbesserte Charpy-Schlagzähigkeit (Vergleichsbeispiel und unter anderem Beispiele 17 und 18).

In einer weiteren Ausführungsform wurden Mischungen hergestellt, umfassend PBT, Aluminiumdiethylphosphinat (DEPAL) Melamincyanurat, Melaminpolyphosphat und ein Polyalkylenterephthalat-Polyester (Poly(butylenterephthalat), Poly(butyleneadipate)), sowie dem Stabilisator Irganox 1010 der BASF und Glasfasern des Typs PPG 3786. Die Mengenanteile an Polyalkylenterephthalat-Polyester wurden variiert.
Die Proben zeigten gegenüber dem Vergleichsbeispiel verbesserte mechanische Eigenschaften bei verbesserter flammhemmender Wirkung (Vergleichsbeispiel und unter anderem Beispiel 19 und 20).

In allen Beispielen wurde die Fließfähigkeiten durch der Zugabe von Polyalkylenterephthalat-Polyester-Urethan 1, 2, 3, Polyalkylenterephthalat-Polyether 1, 2 und Polyalkylenterephthalat-Polyester, im Vergleich zu den Vergleichsbeispielen verbessert.

## Patentansprüche

1. Die Erfindung betrifft eine thermoplastische Zusammensetzung, enthaltend
A) ein Polyalkylenterephthalat
B) ein Elastomer ausgewählt aus der Gruppe
b1) der Polyalkylenterephthalat-Polyester-Urethane,
b2) der Polyalkylenterephthalat-Polyether-Urethane,
b3) der Polyalkylenterephthalat-Polyether,
b4) der Polyalkylenterephthalat-Polyester und deren Mischungen
C) ein halogenfreies Flammschutzmittel, ausgewählt aus der Gruppe
c1) der stickstoffhaltigen Flammschutzmittel
c2) der stickstoff- und phosphorhaltigen Flammschutzmittel
c3) der phosphorhaltigen Flammschutzmittel und deren Mischungen.

2. Thermoplastische Zusammensetzung nach Anspruch 1 worin (b1) ein Polybutylenterephthalat-Polyester-Urethan ist.

3. Thermoplastische Zusammensetzung nach Anspruch 1 worin (b2) ein Polybutylenterephthalat-Polyether ist.

4. Thermoplastische Zusammensetzung nach Anspruch 1 worin (b3) ein Copolymer auf der Basis von einem Polybutylenterephthalat-Polyester ist.

5. Thermoplastische Zusammensetzung nach einem der vorangehenden Ansprüche worin c3) ausgewählt ist aus der Gruppe der Phosphate, Phosphin- und Diphosphinsalze sowie deren Mischungen.

6. Thermoplastische Zusammensetzung nach einem der vorangehenden Ansprüche worin c1) ein stickstoffhaltiger Heterocyclus mit mindestens einem Stickstoffatom ist.

7. Thermoplastische Zusammensetzung nach einem der vorangehenden Ansprüche enthaltend (D) einen Verstärkungszusatz.

8. Thermoplastische Zusammensetzung nach einem der vorangehenden Ansprüche, enthaltend (A) ein Polybutylenterephthalat, (B) ein Polybutylenterephthalat-Polyester-Urethan (b1), (C) Aluminiumdiethylphosphinat, Melamincyanurat, oder Melaminpolyphosphat oder deren Mischungen.

9. Thermoplastische Zusammensetzung nach einem der vorangehenden Ansprüche, enthaltend (A) ein Polybutylenterephthalat, (B) ein Polybutylenterephthalat-Polyether (b3), (C) Aluminiumdiethylphosphinat, Melamincyanurat, oder Melaminpolyphosphat oder deren Mischungen.

10. Thermoplastische Zusammensetzung nach einem der vorangehenden Ansprüche, enthaltend (A) ein Polybutylenterephthalat, (B) ein Polybutylenterephthalat-Polyester (b4), (C) Aluminiumdiethylphosphinat, Melamincyanurat, oder Melaminpolyphosphat oder deren Mischungen.

11. Verwendung der thermoplastischen Zusammensetzung gemäß einem der vorangehenden Ansprüche als Überzugmittel.

12. Verwendung der thermoplastischen Zusammensetzung gemäß einem der Ansprüche 1 bis 9 zur Herstellungen von Fasern, Folien oder.

13. Fasern, Folien oder Formkörper enthaltend eine thermoplastische Zusammensetzung gemäß einem der Ansprüche 1 bis 9.
